# EUROPÄISCHE PATENTANMELDUNG

(11) **EP 2 068 129 A1**
(43) Veröffentlichungstag der Anmeldung: **10.06.2009**
(21) Anmeldenummer: 08021676.5
(22) Anmeldetag: 13.04.2004
(51) Int. Cl.: G01F 1/40, G01F 5/00

(54) **Differenzdruckmittel für eine Gaszähleranordnung mit verbesserter Strömungsgeometrie**

(30) Priorität: 15.04.2003 DE 10317166
(62) Teilanmeldung aus: 04726946.9
(71) Anmelder: EMS-PATENT AG, 7013 Domat/Ems (CH)
(72) Erfinder: Matter, Daniel, 5200 Brugg (CH); Kleiner, Thomas, 5442 Fislisbach (CH); Kramer, Beat, 5210 Windisch (CH)
(74) Vertreter: Pfenning, Meinig & Partner GbR

(57) **Zusammenfassung**

Die Erfindung betrifft ein Differenzdruckmittel (4) und eine Gaszähleranordnung (1) zum genaueren Messen eines Gasbezugs (6a) mit einem Gaszähler (2). Ein Gaszähler (2) in einem Bypass (3) mit einem Differenzdruckmittel (4) in der Gasleitung (5) zum Messen eines Volumenstroms (dV/dt, 6a) durch die Gasleitung (5) ist bekannt. Das Differenzdruckmittel (4) umfasst Strömungskanäle (40), die nun erfindungsgemäß, ausgehend von einer Mittelachse (A) des Differenzdruckmittels (4), mit zunehmender Radialposition (R₁<R₂<R₃) abnehmende Durchmesser (D₁>D₂>D₃>D₄) aufweisen. Ausführungsbeispiele betreffen u.a.: Eintrittsöffnungen (41) und/oder Austrittsöffnungen (42) der Strömungskanäle (40) mit Ansenkwinkel (α) und eine gleichabständige, konzentrische Anordnung von Strömungskanälen (40) auf der Querschnittsfläche (Q) des Differenzdruckmittels(4). Vorteile sind u.a.: eine Erhöhung des Differenzdrucks (4) bei geringem Volumenstrom (dV/dt, 6a), eine Reduktion des Differenzdrucks (4) bei hohem Volumenstrom (dV/dt, 6a) und insgesamt eine verbesserte Linearität über den gesamten Messbereich zwischen Volumenstrom (6b) im Bypass 3 zu Volumenstrom (dV/dt, 6a) in der Gasleitung (5).

## Beschreibung

### TECHNISCHES GEBIET

Die vorliegende Erfindung bezieht sich auf das Gebiet der Messung von Gasbezug mit Durchflusssensoren und insbesondere thermischen Durchflusssensoren. Sie geht aus von einem Differenzdruckmittel und von einer Gaszähleranordnung zum Messen eines Gasverbrauchs gemäss Oberbegriff der unabhängigen Ansprüche.

### STAND DER TECHNIK

In der WO 01/96819 A1 wird ein Gaszähler offenbart, der als Energiemessgerät geeicht ist. Die Eichung beruht darauf, dass Sensorsignalwerte in Abhängigkeit der Durchflussrate eines Eichgases bestimmt und in Form einer Sensoreichkurve im Gaszähler gespeichert werden. Die Sensoreichkurve beziehungsweise die Sensorsignalwerte werden mit einem Signal-Umrechnungsfaktor und einem Brennwertfaktor für das Basis-Gasgemisch multipliziert, so dass das erhaltene Produkt einen Gasverbrauch in einer Energieeinheit angibt. Mit einem weiteren Korrekturfaktor kann wenigstens näherungsweise der tatsächliche Heizwert eines bezogenen Gasgemisches in der Energieeichung berücksichtigt werden. Als tatsächlicher Heizwert kann ein gemessener, über eine bestimmte Zeitspanne gemittelter Heizwert verwendet werden.

In dem U. S. Pat. No. 5'750'892 wird eine Anordnung zur Strömungsmessung mit einem Durchflusssensor in einem Bypass offenbart, bei der im Hauptstrom ein langgestrecktes laminares Strömungselement mit einer Vielzahl von Strömungskanälen vorhanden ist und die Anschlüsse des Bypasses innerhalb der Längserstreckung des Strömungselements liegen. Dadurch kann der Druckabfall über das Strömungselement bzw. den Bypass als Funktion der Volumendurchfluesrate weitgehend linear gehalten werden, da nichtlineare Anteile aufgrund turbulenter Strömungsanteile im Eintritts- und Mündungsbereich des Bypasses und aufgrund eines nichtkonstanten Strömungsquerschnitts minimiert werden.

### DARSTELLUNG DER ERFINDUNG

Aufgabe der vorliegenden Erfindung ist es, ein Differenzdruckmittel für eine Gaszähleranordnung und eine Gaszähleranordnung mit einem Differenzdruckmittel anzugeben, wobei sich Differenzdruckmittel und Gaszähleranordnung durch einen verbesserten Messbereich auszeichnen. Diese Aufgabe wird erfindungsgemäss durch die Merkmale der unabhängigen Ansprüche gelöst.

In einem ersten Aspekt besteht die Erfindung in einem Differenzdruckmittel für eine Gaszähleranordnung, welche einen Gaszähler in einem Bypass zu einer Gasleitung zum Messen eines Gasbezugs durch die Gasleitung umfasst, wobei das Differenzdruckmittel zur Montage in der Gasleitung ausgelegt ist und eine Mehrzahl von Strömungskanälen aufweist, die einen typischen Durchmesser haben, wobei Strömungskanäle in verschiedenen Radialpositionen am Differenzdruckmittel vorhanden sind, wobei diejenigen Strömungskanäle, die näher an einer zentrumsnahen Radialposition am Differenzdruckmittel angeordnet sind, einen grösseren Durchmesser aufweisen und diejenigen Strömungskanäle, die näher an einer umfangsnahen Radialposition am Differenzdruckmittel angeordnet sind, einen kleineren Durchmesser aufweisen. Durch verkleinerte Durchmesser an der Peripherie des Differenzdruckmittels wird für Bypässe, die in diesem Bereich von der Gasleitung abzweigen, eine vorteilhafte Druckerhöhung und damit Erhöhung des Messeffekts im Bypass für tiefe Durchflussraten in der Gasleitung erzielt. Ein solches Differenzdruckmittel gewährleistet eine verbesserte Messempfindlichkeit bei kleinen Volumenflüssen und einen vergrösserten Messbereich und ist daher für laminare Strömungsanordnungen besonders geeignet.

In einem Ausführungsbeispiel weisen die Strömungskanäle ausgehend von einer Mittelachse des Differenzdruckmittels einen mit zunehmender Radialposition monoton abnehmenden Durchmesser auf. Dadurch wird eine besonders vorteilhafte Linearisierung und Ausdehnung des laminaren Messbereichs erzielt.

In einem anderen Ausführungsbeispiel weisen die Eintrittsöffnungen und/oder Austrittsöffnungen der Strömungskanäle Ansenkwinkel, insbesondere im Winkelbereich 30°-90°, vorzugsweise 45°-75°, besonders bevorzugt 55°-65°, auf. Dies bewirkt einen verminderten Differenzdruck bei hohen Durchflussraten, so dass der Anteil der turbulenten Strömung bei hohen Durchflussraten gesenkt wird.

Durch die Ausführungsbeispiele gemäss Anspruch 4 und 5 wird der laminare strömungsbereich in der Hauptleitung und damit die Linearität zwischen Volumenstrom in Hauptleitung und Bypass und der lineare Messbereich weiter verbessert.

In einem weiteren Aspekt besteht die Erfindung in einer Gaszähleranordnung zum Messen eines Gasbezugs, insbesondere im privaten, öffentlichen oder industriellen Bereich, umfassend einen Gaszähler, der in einem Bypass zu einer Gasleitung angeordnet ist, und ein Differenzdruckmittel, das in der Gasleitung angeordnet ist und eine Mehrzahl von Strömungskanälen aufweist, die einen typischen Durchmesser haben, wobei Strömungskanäle in verschiedenen Radialpositionen am Differenzdruckmittel vorhanden sind und diejenigen Strömungskanäle, deren radiale Position näher an einer Eintrittsöffnung des Bypasses liegen, einen kleineren Durchmesser aufweisen und diejenigen Strömungskanäle, deren radiale Position weiter entfernt von einer Eintrittsöffnung des Bypasses liegen, einen grösseren Durchmesser aufweisen. Durch diese Gaszähleranordnung werden die oben genannten Vorteile auch dann erreicht, wenn die Abzweigungen des Bypasses, d. h. die Eintritts- und Austrittsöffnungen, beliebig im Rohrquerschnitt der Hauptgasleitung angeordnet sind.

Weitere Ausführungen, Vorteile und Anwendungen der Erfindung ergeben sich aus abhängigen Ansprüchen sowie aus der nun folgenden Beschreibung und den Figuren.

### KURZE BESCHREIBUNG DER ZEICHNUNGEN

Es zeigen:
- Fig. 1: im Querschnitt eine schematische Darstellung der Gaszählergeometrie;
- Fig. 2: einen Vergleich relativer Druckverläufe für un- terschiedliche bekannte Differenzdruckelemente;
- Fig. 3a, 3b: im Aufriss und im Querschnitt ein erfindungs- gemässes Rohrbündel-Differenzdruckelement; und
- Fig. 4: Messkurven relativer Differenzdruckwerte für ein erfindungsgemässes und ein konventionelles Rohr- bündel-Differenzdruckelement.

In den Figuren sind gleiche Teile mit gleichen Bezugszeichen versehen.

### WEGE ZUR AUSFÜHRUNG DER ERFINDUNG

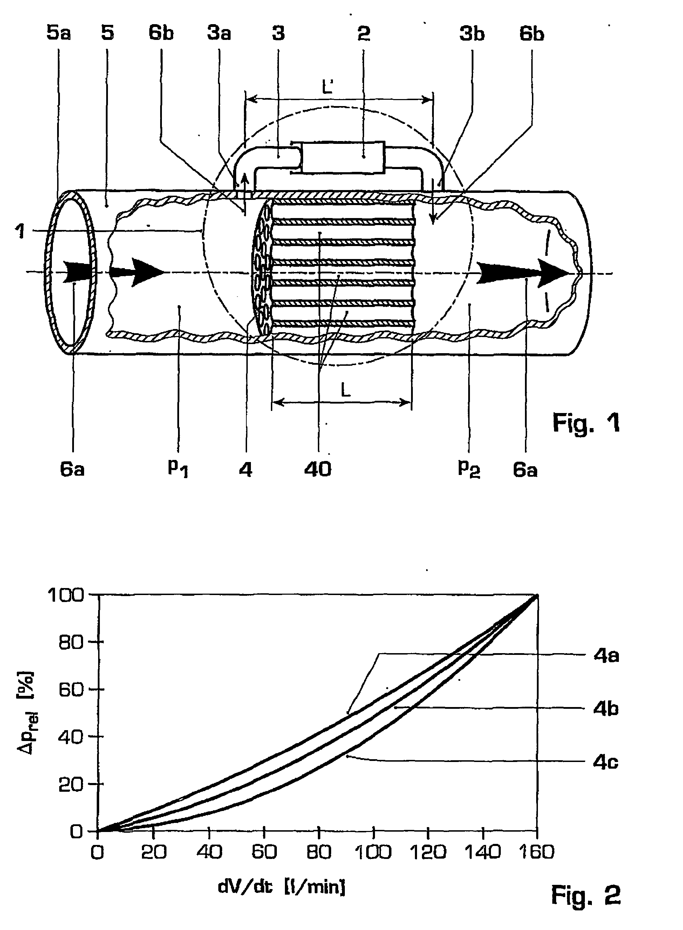

Fig. 1 zeigt eine Gaszähleranordnung 1 umfassend einen Gaszähler 2, der in einem Messkanal oder Bypass 3 angeordnet ist, und ein Differenzdruckmittel 4, das in der Hauptleitung 5 angeordnet ist. Typischerweise besitzt der Gaszähler 2 einen thermischen Durchflusssensor (nicht dargestellt) zur Bestimmung eines Volumens, Normvolumens oder Energiewertes des durchströmenden Gases. Der Bypass 3 ist hier beispielhaft und vorteilhaft an einer Seitenwand 5a der Gasleitung 5 angeordnet und weist im Bereich der Abzweigungen eine Eintrittsöffnung 3a und eine Austrittsöffnung 3b an der Seitenwand 5a auf. Der Bypass 3 ist hier im wesentlichen parallel zur Gasleitung 5 erstreckt. Andere, nicht dargestellte Anordnungen, Abzweigungen und Formen des Bypasses 3 sind ebenfalls möglich. In der Gasleitung 5 strömt ein Hauptgasstrom 6a, von dem ein kleiner Bypass-Gasstrom 6b abgezweigt wird. Das Abzweigungsverhältnis, d. h. das Verhältnis der Volumenflüsse 6b zu 6a, wird hauptsächlich durch das Differenzdruckmittel 4 vorgegeben.

Fig. 2 zeigt einen Vergleich des relativen Druckabfalls Δpᵣₑₗ als Funktion des Volumenflusses oder Volumenstroms dV/dt für verschiedene an sich bekannte Differenzdruckmittel 4, nämlich für eine dünnwandige Bienenwabenstruktur 4a, ein Rohrbündel 4b oder ein Venturirohr 4c. Die Bienenwabenstruktur 4a zeigt einen sehr linearen Druckanstieg als Funktion des Hauptvolumenstroms 6a. Nachteilig ist, dass die maximal erreichbaren Differenzdrücke zu klein sind, um genügend Durchfluss 6b im Bypass 3 zu erzeugen. Das Venturirohr 4c zeigt im allgemeinen einen zu geringen Bereich mit laminarem Strömungsverhalten und damit linearem Druckanstieg und linearem Abzweigungsverhältnis der Volumenströme 6b zu 6a. Das Rohrbündel-Differenzdruckmittel 4b weist eine Mehrzahl von Strömungskanälen 40 auf, die typischerweise rund sind, entlang der Hauptleitung 5 längserstreckt und parallel zueinander angeordnet sind. Herkömmliche Rohrbündel-Differenzdruckmittel 4b leiden auch an den genannten Nachteilen. Die Linearität ist zwar, wie aus Fig. 2 ersichtlich, besser als bei einem Venturirohr 4c, aber der Druckabfall Δpᵣₑₗ ist für kleine Volumenflüsse 6a zu gering.

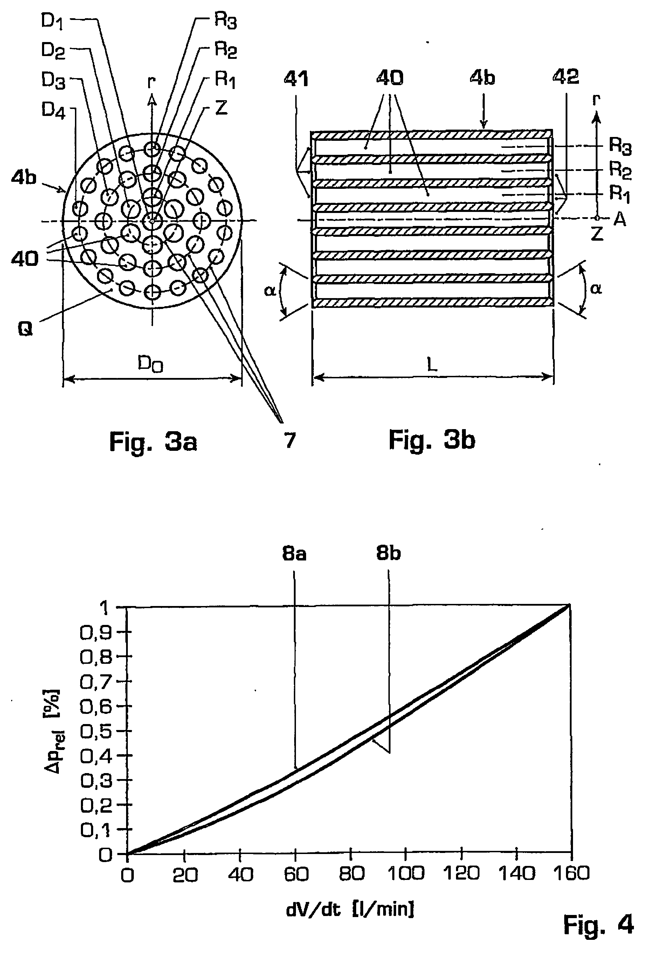

Fig. 3a, 3b zeigen ein Ausführungsbeispiel eines erfindungsgemässen Rohrbündel-Differenzdruckmittels 4b. Die Strömungskanäle 40 sind in verschiedenen Radialpositionen R₁, P₂, R₃ oder allgemein R₁, ..., Rₙ mit n=ganzzahliger Index am Differenzdruckmittel 4 vorhanden und weisen einen typischen Durchmesser D₁, ..., D₄ oder allgemein D₁, ..., Dₘ mit m=ganzzahliger Index, insbesondere bei rundem Querschnitt den Durchmesser D₁, ..., D₄ oder allgemein D₁, ..., Dₘ auf. Mit Vorteil liegt m zwischen 2 und 6 oder 3 und 5 oder m=4.

Erfindungsgemäss haben diejenigen Strömungskanäle 40, die näher an einer zentrumsnahen Radialposition R₁ am Differenzdruckmittel 4 angeordnet sind, einen grösseren Durchmesser D₁, D₂ und diejenigen Strömungskanäle 40, die näher an einer umfangsnahen Radialposition R₃ am Differenzdruckmittel 4 angeordnet sind, haben einen kleineren Durchmesser D₃, D₄. Mit Vorteil nehmen die Durchmesser D₁>D₂>D₃>D₄ oder allgemein D₁> ...> Dₘ der Strömungskanäle 40, ausgehend von der Mittelachse A des Differenzdruckmittels 4 bzw. der Gasleitung 5, mit zunehmender Radialkoordinate R₁<R₂<R₃ oder allgemein R₁<...<Rₐ kontinuierlich ab. Im allgemeinen Fall, wenn die Abzweigungen 3a, 3b des Bypasses, d. h. die Eintritts- und Austrittsöffnungen 3a, 3b an beliebigen Radialpositionen R im Hauptrohr 5 positioniert sind, sollen erfindungsgemäss diejenigen Strömungskanäle 40, deren Radialposition R₁, ..., Rₙ näher an der Eintrittsöffnung 3a des Bypasses 3 liegen, einen kleineren Durchmesser D₁, ..., Dₘ aufweisen, und diejenigen Strömungskanäle 40, deren Radialposition R₁, ..., Rₙ weiter entfernt von einer Eintrittsöffnung 3a des Bypasses 3 liegen, einen grösseren Durchmesser D₁, ..., Dₘ aufweisen.

Fig. 4 zeigt einen Vergleich relativer Differenzdruckverläufe für ein konventionelles Rohrbündel-Differenz-druckmittel mit D₁=D₂=D₃=D₄ (8b) und ein erfindungsgemässes Rohrbündel-Differenzdruckmittel mit D₁≥D₂>D₃≥D₄ (8a). Man erkennt, dass durch die erfindungsgemässe Variation der Lochdurchmesser D₁, ..., D₄, nämlich die Vergrösserung zentrumsnaher Einströmöffnungen D₁, D₂ und/oder die Verkleinerung zentrumsferner, umfangsseitiger Einströmöffnungen D₃, D₄, der relative Differenzdruck Δpᵣₑₗ für kleine Volumenströme 6a erhöht und damit der gesamte Messbereich weitgehend linearisiert wird. Der Grund für diesen vorteilhaften erfindungsgemässen Effekt liegt darin, dass bei der vorliegenden laminaren Strömung 6a die Lochdurchmesser D₃, D₄ der nahe beim Bypass 3 liegenden Löcher stärkeren Einfluss auf den Gesamtdruckabfall Δp haben als diejenigen Lochdurchmesser D₁, D₂ nahe beim Zentrum Z des Differenzdruckmittels 4 bzw. der Gasleitung 5. In Experimenten wurde ein maximal erreichbarer Gesamtdruckabfall Δp=p₁-p₂ des Differenzdruckmittels 4 von 2 mbar erreicht. Insgesamt ergibt sich ein grosser Bereich laminarer Strömung und weitgehender Linearität des Abzweigungsverhältnisses der Volumenströme 6b zu 6a ohne Einschränkung der oberen Messgrenze.

Mit Vorteil haben die Eintrittsöffnungen 41 und/oder Austrittsöffnungen 42 der Strömungskanäle 40 gemäss Fig. 3 Ansenkwinkel α zwischen 30°-90°, vorzugsweise 45°-75°, besonders bevorzugt 55°-65°. Dies bewirkt einen verminderten Differenzdruck für hohe Durchflussraten dV/dt und unterstützt damit eine Linearisierung des Messbereichs bei grossem Volumenstrom 6a. Die Ansenkung bewirkt nämlich, dass die bei hohen Durchflussraten dV/dt auftretenden teilturbulenten strömungsverhältnisse (Übergangsbereich) zurückgedrängt werden. Da der Differenzdruck Ap über das Differenzdruckmittel 4 für den turbulenten Anteil der Strömung proportional zum Quadrat der Flussgeschwindigkeit oder des Volumenstroms dV/dt bzw. 6a ansteigt, resultiert ein verminderter Differenzdruck Δp oder Δpᵣₑₗ bei hohen Volumenströmen 6a. Mit den angesenkten Löchern 41 und/oder 42 wird also erreicht, dass bei hohen Durchflussraten der turbulente Strömungsanteil mit hoher Reynoldszahl gesenkt wird.

Mit Vorteil ist zur weiteren Verbesserung der Laminarität des Volumenstroms 6a ein Verhältnis von Gesamtlänge L zu Gesamtdurchmesser D₀ des Differenzdruckmittels 4 grösser als 1, vorzugsweise 1,3 und besonders bevorzugt 1,5 gewählt. Dadurch wird die Ausbildung einer laminaren Rohrreibung in jedem Strömungskanal 40 verbessert und der relative Anteil turbulenter Strömung zurückgedrängt. Je grösser der Faktor Gesamtlänge zu Gesamtdurchmesser L/Dₒ ist, umso linearer ist der Zusammenhang zwischen dem Volumenstrom 6a durch die Gasleitung 6a und dem vom Differenzdruckmittel 4 erzeugten Differenzdruck Δp=p₁-p₂, der wiederum proportional zum Volumenstrom 6b durch den Bypass 3 und den Gaszähler 2 oder dessen thermischen Durchflusssensor ist. Bevorzugt weisen die Strömungskanäle 40 einen runden Querschnitt auf und ist der typische Durchmesser D₁, ..., Dₘ gegeben durch den Durchmesser D₁, ..., Dₘ von Eintrittsöffnungen 41 der Strömungskanäle 40. Ebenfalls bevorzugt weisen die Strömungskanäle 40 einen über die Gesamtlänge L des Differenzdruckmittels 4 konstanten Strömungsquerschnitt auf.

In der Ausführungsform gemäss Fig. 3a und Fig. 3b sind die Strömungskanäle 40 auf der Querschnittsfläche Q des Differenzdruckmittels 4 gleichabständig auf konzentrischen Kreisen 7 angeordnet. Die Querschnittsfläche Q des Differenzdruckmittels 4 kann ein Öffnungsverhältnis im Bereich 0,3...0,8, bevorzugt 0,3...0,6, insbesondere 0,4...0,5, haben.

In einem weiteren Aspekt betrifft die Erfindung eine Gaszähleranordnung 1 zum Messen eines Gasbezugs, insbesondere für Haushalte, umfassend einen Gaszähler 2 im Bypass 3 und das oben genannte Differenzdruckmittel 4 in der Gasleitung 5. Hierbei sollen eine Längserstreckung L' des Bypasses 3 grösser als eine oder gleich einer Gesamtlänge L des Differenzdruckmittels 4 gewählt sein und das Differenzdruckmittel 4 in der Gasleitung 5 zwischen der Eintrittsöffnung 3a und der Austrittsöffnung 3b des Bypasses 3 angeordnet sein. Günstig ist eine mittige Anordnung des Differenzdruckmittels 4 zwischen den Bypassöffnungen 3a, 3b. Auf diese Weise ist sichergestellt, dass genau der durch das Differenzdruckmittel 4 definierte Differenzdruck Δp=p₁-p₂ über dem Bypass 3 anliegt. Durch die erfindungsgemässe Ausbildung des Differenzdruckmittels 4, nämlich verringerte Durchmesser D₁, ..., Dₘ der Strömungskanäle 40 in der Nähe von Eintritts- und Austrittsöffnungen 41 des Bypasses 3, wird das Strömungsprofil über den Querschnitt Q des Differenzdruckmittels 4 bzw. der Gasleitung 5 so modifiziert, dass bei kleinen Volumenströmen 6a ein überproportional vergrösserter Differenzdruck Δp über dem Bypass 3 anliegt und den Bypass-Volumenstrom 6b antreibt.

In einem bevorzugten Ausführungsbeispiel weist der Gaszähler 2 einen thermischen Durchflusssensor, insbesondere ein CMOS-Anemometer, mit einem Heizdraht und mindestens einem stromaufwärts und/oder stromabwärts angeordneten Temperatursensor auf. Insbesondere kann der Gaszähler 2 Mittel zur Kalibration des Gasbezugs in Normvolumeneinheiten, z. B. Liter/Minute (l/min), und/oder Bnergieeinheiten, z. B. Kilowatt/Stunde (kW/h), aufweisen. Dies ist detailliert in der WO 01/96819 beschrieben, die hiermit durch Bezugnahme mit ihrem gesamten Offenbarungsgehalt in die Beschreibung aufgenommen wird.

### BEZUGSZEICHENLISTE

- 1: Gaszähleranordnung
- 2: Gaszähler mit thermischem Durchflusssensor, CMOS-Sensorchip Gaszähler
- 3: Bypass
- 3a: Bypass-Eintrittsöffnung
- 3b: Bypass-Austrittsöffnung
- 4: Differenzdruckmittel
- 40: Strömungskanäle, Röhrchen
- 41: Eintrittsöffnungen
- 42: Austrittsöffnungen
- 4a: Bienenwabenstruktur
- 4b: Rohrbündel
- 4c: Venturirohr
- 5: Strömungskanal, Rohr, Hauptleitung
- 5a: Seitenwand der Hauptleitung
- 6a: Volumenfluss in Hauptleitung
- 6b: Volumenfluss in Bypassleitung
- 7: konzentrische Kreise
- 8a, 8b: relative Differenzdruckkurven

- α: Ansenkwinkel
- A: Mittelachse
- D₀: Gesamtdurchmesser
- D₁,..., D₄: Röhrendurchmesser
- L: Länge des Differenzdruckmittels
- L': Längserstreckung des Bypasses
- p₁, p₂: Druck vor, nach Differenzdruckmittel
- Δpᵣₑₗ: relativer Differenzdruck
- Q: Querschnittsfläche
- r: Radius
- R₁, ..., R₃: radiale Positionen
- U: umfangsseitige Position
- dV/dt: Volumenfluss
- Z: Zentrum des Differenzdruckmittels, zentrale Ra- dialposition

## Patentansprüche

1. Differenzdruckmittel (4) für eine Gaszähleranordnung (1), welche einen Gaszähler (2) in einem Bypass (3) zu einer Gasleitung (5) zum Messen eines Gasbezugs durch die Gasleitung (5) umfasst, wobei das Differenzdruckmittel (4) zur Montage in der Gasleitung (5) ausgelegt ist und eine Mehrzahl von Strömungskanälen (40) aufweist, die einen typischen Durchmesser (D₁, ..., D₄) haben, wobei Strömungskanäle (40) in verschiedenen Radialpositionen (R₁, R₂, R₃) am Differenzdruckmittel (4) vorhanden sind, **dadurch gekennzeichnet, dass**
a) diejenigen Strömungskanäle (40), die näher an einer zentrumnahen Radialposition (R₁) am Differenzdruckmittel (4) angeordnet sind, einen grösseren Durchmesser (D₁, D₂) aufweisen und
b) diejenigen Strömungskanäle (40), die näher an einer umfangnahen Radialposition (R₃) am Differenzdruckmittel (4) angeordnet sind, einen kleineren Durchmesser (D₃, D₄) aufweisen.

2. Differenzdruckmittel (4) nach Anspruch 1, **dadurch gekennzeichnet, dass**
die Strömungskanäle (40) ausgehend von einer Mittelachse (A) des Differenzdruckmittels (4) einen mit zunehmender Radialposition (R₁, R₂, R₃) monoton abnehmenden Durchmesser (D₁>D₂>D₃>D₄) aufweisen.

3. Differenzdruckmittel (4) nach Anspruch 1, **dadurch gekennzeichnet, dass**
a) Eintrittsöffnungen (41) und/oder Austriffsöffnungen(42) der Strömungskanäle (40) Ansenkwinkel (α) aufweisen und
b) insbesondere dass die Ansenkwinkel (α) im Winkelbereich 30°-90°, vorzugsweise 45°-75°, besonders bevorzugt 55°-65° liegen.

4. Differenzdruckmittel (4) nach einem der vorangehenden Ansprüche, **dadurch gekennzeichnet, dass**
a) ein Verhältnis von Gesamtlänge (L) zu Gesamtdurchmesser (D₀) des Differenzdruckmittels (4) grösser als 1, vorzugsweise 1,3 und besonders bevorzugt 1,5 gewählt ist und/oder
b) die Strömungskanäle (40) einen runden Querschnitt aufweisen und der typische Durchmesser (D₁, ..., D₄) der Durchmesser (D₁, ..., D₄) von Eintrittsöffnungen (41) der Strömungskanäle (40) ist und/oder
c) die Strömungskanäle (40) einen über die Gesamtlänge (L) des Differenzdruckmittels (4) konstanten Strömungsdurchschnitt aufweisen.

5. Dirrerenzdruckmittel (4) nach einem der vorangehenden Ansprüche, **dadurch gekennzeichnet, dass**
a) die Strömungskanäle (40) auf der Querschnittsfläche (Q) des Differenzdruckmittels (4) gleichabständig auf konzentrischen Kreisen (7) angeordnet sind und/oder
b) die Querschnittsfläche (Q) des Differenzdruckmittels (4) ein Öffnungsverhältnis in einem Bereich 0, 3...0, 8, bevotzugt 0, 3...0, 6, insbesondere 0, 4...0, 5 hat.

6. Gaszähleranordnung (1) zum Messen eines Gasbezugs, insbesondere im privaten, öffentlichen oder industriellen Bericht, umfassend einen Gaszähler (2), der in einem Bypass (3) zu einer Gasleitung (5) angeordnet ist, und ein differenzdruckmittel (4), das in der Gasleitung (5) angeordnet ist und eine Mehrzahl von Strömungskanälen (40) aufweist, die einen typischen Durchmesser (D₁, ..., D₄) haben, wobei Strömungskanäle (40) in verschiedenen Radialpositionen (R₁, R₂, R₃) am Differenzdruckmittel (4) vorhanden sind, **dadurch gekennzeichnet, dass**
a) diejenigen Strömungskanäle (40), deren Radialposition (R₁, R₂, R₃) näher an einer Eintrittsöffnung (3a) des Bypasses (3) liegen, einen kleineren Durchmesser (D₁, ..., D₄) aufweisen und
b) diejenigen Strömungskanäle (40), deren Radialposition (R₁, R₂, R₃) weiter entfernt von einer Eintrittsöffnung (3a) des Bypasses (3) liegen, einen grösseren Durchmesser (D₁, ..., D₄) aufweisen.

7. Gaszählerordnung (1) nach Anspruch 6, **dadurch gekennzeichnet, dass**
a) eine Eintrittsöffnung (3a) und eine Austrittsöffnung (3b) des Bypasses (3) an einer Seitenwand (5a) der Gasleitung (5) angeordnet sind und/oder
b) eine Längserstreckung (L') des Bypasses (3) grösser als eine oder gleich einer Gesamtlänge (L) des Differenzdruckmittels (4) gewählt ist und das Differenzdruckmittel (4) in der Gasleitung (5) zwischen der Eintrittsöffnung (3a) und der Austrittsöffnung (3b) des Bypasses (3) angeordnet ist.

8. Gaszähleranordnung (1) nach Anspruch 7a, **dadurch gekennzeichnet, dass**
die Strömungskanäle (40) ausgehend von einer Mittelachse (A) des Differenzdruckmittels (4) mit zunehmender Radialposition (R₁, R₂, R₃), einen monoton abnehmenden Durchmesser (D₁>D₂>D₃>D₄) aufweisen.

9. Gaszähleranordnung (1) nach einem der Ansprüche 6-8, **dadurch gekennzeichnet, dass** das Differenzdruckmittel (4) gemäss einem der Ansprüche 3-5 ausgestaltet ist.

10. Gaszähleranordnung (1) nach einem der Ansprüche 6-9, **dadurch gekennzeichnet, dass**
a) der Gashäzler (2) dinen thermischen Durchflusssensor, insbesondere ein CMOS-Anemometer, mit einem Heizdraht und mindestens einem stromaufwärts und/oder stromabwärts angeordneten Temperatursensor aufweist und/oder
b) der Gaszähler (2) Mittel zur Klibration des Gasbezugs in Normvolumeneinheiten (1/min) und/oder Energieeinheiten (kW/h) aufweist.
